# EUROPÄISCHE PATENTSCHRIFT

(11) **EP 2 892 304 B1**
(45) Veröffentlichungstag und Bekanntmachung des Hinweises auf die Patenterteilung: **04.01.2017**
(21) Anmeldenummer: 14194636.8
(22) Anmeldetag: 25.11.2014
(51) Int. Cl.: H05B 33/08, H05B 37/02

(54) **Geräteanordnung**
Device assembly
Système d'appareils

(30) Priorität: 03.01.2014 DE 102014100041
(43) Veröffentlichungstag der Anmeldung: 08.07.2015
(73) Patentinhaber: Insta Elektro GmbH, 58509 Lüdenscheid (DE)
(72) Erfinder: Becker-Hennecke, Ralph, 58239 Schwerte (DE); Burmann, Christof, 59939 Olsberg (DE); Neuhaus, Stefan, 44287 Dortmund (DE)

(56) Entgegenhaltungen:
- DE-A1-102006 028 670
- DE-A1-102011 086 702
- JP-A- 2003 031 377
- US-A1- 2013 181 630

## Beschreibung

Die vorliegende Erfindung geht von einer gemäß Oberbegriff des Hauptanspruches konzipierten Geräteanordnung aus.

Dimmer derartiger Geräteanordnungen sind in der Regel dafür vorgesehen, in Gebäuden installierte Beleuchtungseinrichtungen (Lampen, Leuchten) bedarfsgerecht zu beeinflussen. Solche Beleuchtungseinrichtungen (Lampen, Leuchten) können mit verschiedenartig ausgeführten Leuchtmitteln ausgerüstet sein. Als Beispiel für solche Leuchtmittel sind insbesondere zu nennen Glühlampen, Halogenlampen, Leuchtstofflampen und LED-Lampen. Aus diesem Grund sind auch verschiedenartig arbeitende Dimmer (Phasenanschnitt, Phasenabschnitt, Universal usw.) vorbekannt. Die Bedienung bzw. Betätigung solcher Dimmer kann zum Beispiel durch eine Drehbetätigung, Tastbetätigung, Wischbetätigung und so weiter erfolgen. Es finden sowohl bildschirmgeführte Bedieneinheiten, als auch Bedieneinheiten mit manuellen Betätigungselementen (Drehsteller, Drucktasten, Wipptasten und so weiter) Verwendung. Zur Beeinflussung werden üblicherweise vom Benutzer an den Bedienelementen bzw. an der Bedieneinheit Bediengrößen (Steuerinformationen) eingestellt, die an die zugeordneten Leuchtmittel (Leuchten, Lampen) zu deren bedarfsgerechten Beeinflussung übertragen werden. Die Übertragung kann drahtgebunden oder aber drahtlos zum Beispiel per Funk erfolgen.

Durch die DE 10 2006 028 670 A1 ist eine dem Oberbegriff des Hauptanspruches entsprechende Geräteanordnung mit zumindest einem Dimmer bekannt geworden. Es ist zumindest ein Dimmer vorgesehen, welcher datentechnisch mit einem weiteren Gerät in Verbindung bringbar ist. Der Dimmer ist zur bedarfsgerechten Beeinflussung von in Gebäuden installierten Leuchtmitteln mit einer Logikeinheit zur Verarbeitung und Aufbereitung von Steuerinformationen versehen, wobei die Logikeinheit steuerseitig mit zumindest einer Bedieneinheit und beeinflussungsseitig mit zumindest einem Leuchtmittel in Verbindung steht. Die Logikeinheit weist einen Speicher zur veränderbaren Speicherung von leuchtmittelspezifischen Steuerinformationen (Steuerprogrammen) auf.

Durch die DE 10 2010 017 112 B4 ist weitere Geräteanordnung mit zumindest einem Dimmer bekannt geworden. Der Dimmer bzw. die Dimmer dieser Geräteanordnung ist bzw. sind zur bedarfsgerechten Beeinflussung von in Gebäuden installierten Leuchtmitteln (Leuchten, Lampen) vorgesehen. Diese Geräteanordnung besteht aus einem als Hauptstelle ausgeführten und zumindest einem als Nebenstelle ausgeführten Dimmer, welche drahtgebunden miteinander in Verbindung stehen. Um bedarfsgerecht Einstellwerte der Betätigungselemente zumindest zweier Dimmer austauschen zu können, werden diese Einstellwerte spannungscodiert auf eine zur Verbindung vorgesehene elektrische Leitung aufgeprägt. Zumindest einer der Dimmer weist eine Logikeinheit zur Verarbeitung und Aufbereitung von Steuerinformationen auf, wobei die Logikeinheit steuerseitig mit einer Bedieneinheit und beeinflussungsseitig mit zumindest einem Leuchtmittel (Leuchte, Lampe) in Verbindung steht. Bei solchen Dimmern besteht jedoch die Problematik, dass die in der Logikeinheit abgelegten, zur bedarfsgerechten Beeinflussung der anzusteuernden Leuchtmittel vorgesehenen Steuerinformationen fest eingegeben sind, also nachträglich nicht ausgetauscht oder aktualisiert werden können. Heutzutage unterliegen die zur Verwendung in Gebäuden vorgesehenen Leuchtmittel (Leuchten, Lampen) jedoch einer hohen Änderungsgeschwindigkeit, was dazu führen kann, dass bereits in den Markt gelieferte und/oder zukünftig in den Markt zu liefernde Leuchtmittel (Leuchten, Lampen) mittels bereits installierter Dimmer nicht mehr oder zumindest nicht mehr optimal beeinflusst werden können. Das ist der Fall, weil die in der Logikeinheit der Dimmer vorhandenen Steuerinformationen (Steuerprogramm) zur Beeinflussung der Leuchtmittel (Leuchten, Lampen) den gestellten Anforderungen nicht mehr gerecht werden. Insbesondere bei Leuchtmitteln (Leuchten, Lampen) ist zu beobachten, dass diese immer schneller umfangreich überarbeitet oder aber gänzlich durch neuartige ersetzt werden, was dann immer häufiger und folgenschwerer zu der vorbeschriebenen Problematik hinsichtlich einer bedarfsgerechten Ansteuerung führt. Oftmals muss dann zumindest ein Dimmer einer solchen Geräteanordnung ausgetauscht werden, damit die im Gebäude verbauten Leuchtmittel (Leuchten, Lampen) wieder bedarfsgerecht beeinflusst werden können, was mit einem erheblichen montagetechnischen Aufwand und entsprechend hohen Kosten verbunden ist.

Außerdem ist es durch die DE 10 2011 086 702 A1 bekannt, eine Konfiguration von Betriebsgeräten für Leuchtmittel vorzunehmen, wobei eines der Geräte als mobiles Gerät ausgeführt ist. In einem ersten Aspekt ist ein mobiles Gerät vorgesehen, um die Konfiguration wenigstens eines Betriebsgerätes zum Betrieb eines Leuchtmittels und/oder einer Leuchte vornehmen zu können. Das mobile Gerät weist wenigstens einen optischen Sensor auf, der lichttechnische Parameter zum Beispiel über eine geräteinterne Bildverarbeitung erfasst und/oder wenigstens eine Lokalisierungseinheit aufweist, die vorgesehen ist, absolute und/oder relative Positionsparameter des mobilen Gerätes zu erfassen. Das mobile Gerät weist eine Schnittstelle zur Kommunikation mit dem wenigstens einen Betriebsgerät auf und ist insbesondere dazu eingerichtet, über die Schnittstellen Konfigurationsparameter mit dem Betriebsgerät auszutauschen und auf Basis der erfassten lichttechnischen Parameter und/oder Positionsparameter wenigstens einen, die Lichtwiedergabe des Leuchtmittels beeinflussenden Konfigurationsparameter in dem Betriebsgerät zu verändern. Der wenigstens eine optische Sensor kann ein Lichtsensor, ein Farbsensor, ein Bildsensor und/oder eine Kamera sein. Schnittstellen können für eine drahtlose und/oder eine drahtgebundene Kommunikation eingerichtet sein.

Zudem ist durch die US 2013/0181630 A1 ein Laststeuersystem bekannt geworden, welches ein Laststeuergerät zum Steuern einer elektrischen Last umfasst. Das Laststeuergerät erhält Strom von einer Wechselstromquelle und weist einen passenden Controller zum Einbau in eine Reihenschaltung zwischen der zugehörigen Stromquelle und dem Laststeuergerät auf. Das Laststeuersystem ist zum Einbau ohne Verwendung zusätzlicher Kabel vorgesehen und kann einfach, ohne Benutzung eines Computers beziehungsweise komplizierter Inbetriebnahme konfiguriert werden. Das Laststeuergerät erhält Strom und Kommunikationsdaten über zwei Kabel, woraufhin der Controller einen Phasenstrom mit mindestens einer Zeitflanke in jeder Halbwelle generiert und die daraus gewonnenen digitalen Informationen durch Modulation einer Zeitflanke des Phasensteuerstroms relativ zur Zeitflanke bearbeitet. Der Controller kann eingesetzt werden, um die Steuerinformationen einer Vielzahl von unterschiedlichen Eingabegeräten zu empfangen und das Laststeuergerät kann eingesetzt werden, um eine Vielzahl von verschiedenen Lasten zu steuern.

Des Weiteren ist durch die JP 2003 031377A ein Lichtsteuersystem bekannt geworden, bei dem Einstelländerungen und Bedienanweisungen über ein, einen LCD-Monitor aufweisendes Einstellgerät übertragen werden können. Informationen, die auf Basis der Bedienung des mobilen Einstellgerätes erzeugt werden, werden an einen zentralen Prozessor gesendet und in einer Speichereinheit gespeichert. Die Informationen werden mittels eines entsprechenden Übertragungssignals an weitere Teilnehmer des Lichtsteuersystems übertragen.

Ausgehend von einer solchen Geräteanordnung mit zumindest einem Dimmer liegt der vorliegenden Erfindung die Aufgabe zugrunde, einen Dimmer für eine Geräteanordnung zu schaffen, bei welchem die Möglichkeit besteht, auf besonders einfache Art und Weise Anpassungen der Steuerinformationen (Steuerprogramme) aufgrund der Erfassung von lichttechnischen Veränderungen vorzunehmen, um möglichst optimal eine bedarfsgerechte Beeinflussung der angeschlossenen Leuchtmittel (Leuchten, Lampen) zu ermöglichen.

Erfindungsgemäß wird diese Aufgabe durch die im Hauptanspruch angegebenen Merkmale gelöst.

Bei einer solchen Ausbildung ist besonders vorteilhaft, dass zur bedarfsgerechten Ansteuerung von neuartige Anforderungen stellenden Leuchtmitteln (Lampen, Leuchten) lediglich eine Anpassung oder ein Austausch der in der Logikeinheit zumindest eines Dimmers abgelegten Steuerinformationen (Steuerprogrammen) durchzuführen ist, was teilweise automatisch mittels der Durchführung eines kompletten Dimmvorganges bei Erfassung der sich dabei ergebenden lichttechnischen Veränderungen auf besonders einfache Art und Weise erfolgt.

Weitere vorteilhafte Ausgestaltungen des erfindungsgemäßen Gegenstandes sind in den Unteransprüchen angegeben. Anhand eines Ausführungsbeispieles sei die Erfindung im Prinzip näher erläutert. Dabei zeigen:
- Fig. 1:: prinziphaft eine Geräteanordnung mit einem Dimmer, an den ein Leuchtmittel angeschlossenen ist und mit einem Messgerät, welches gemäß erstem Ausführungsbeispiel als Aufsatzeinheit ausgeführt ist;
- Fig. 2:: prinziphaft eine Geräteanordnung mit einem Dimmer an den ein Leuchtmittel angeschlossenen ist und mit einem Messgerät, welches gemäß zweitem Ausführungsbeispiel ähnlich einer Fernbedienung ausgeführt ist.

Wie aus den Zeichnungen hervorgeht, besteht der Dimmer D einer derartigen Geräteanordnung zur bedarfsgerechten Beeinflussung von in Gebäuden installierten Leuchtmitteln L (Lampen, Leuchten) hauptsächlich aus einer Unterputzeinheit 1 und einer Aufsatzeinheit 2. Die Unterputzeinheit 1 weist eine Logikeinheit 3, einen Speicher 4 und einen Mikrocontroller 5 zur veränderbaren Speicherung von leuchtmittelspezifischen Steuerinformationen (Steuerprogrammen) auf. Die Logikeinheit 3 kann mit einem Lichtsensor 6 in Verbindung gebracht werden, der während zumindest eines kompletten Dimmvorganges die sich dadurch ergebenden lichttechnischen Änderungen (Helligkeitsänderungen) erfasst und diese lichttechnischen Änderungen der Logikeinheit 3 des Dimmers D zuführt. Die Logikeinheit 3 verarbeitet die durch den Lichtsensor 6 erfassten lichttechnischen Änderungen (Helligkeitsänderungen) und passt gegebenenfalls die im Speicher 4 abgelegten Steuerinformationen (Steuerprogramme) unter Zuhilfenahme des Mikrocontrollers 5 daran an, um möglichst optimal eine bedarfsgerechte Beeinflussung der angeschlossenen Leuchtmittel L (Leuchten, Lampen) zu ermöglichen. Bei den beiden vorliegenden Ausführungsbeispielen ist die Bedieneinheit 7 je als Dreh-/Drücksteller ausgebildet. Die Messung der lichttechnischen Veränderungen wird mit einem als weiteres Gerät ausgeführten mobilen Messgerät M durchgeführt, welches datentechnisch mit der Logikeinheit 3 des Dimmers D in Verbindung bringbar ist. Das mobile Messgerät M weist den Lichtsensor 6 auf, der während zumindest eines kompletten Dimmvorganges die lichttechnischen Veränderungen erfasst. Diese durch den Lichtsensor 6 erfassten lichttechnischen Veränderungen werden über einen zweiten Mikrocontroller M1 in einen zweiten Speicher M2 des mobilen Messgerätes M eingeschrieben und für eine Übertragung an die Logikeinheit 3 des Dimmers D aufbereitet.

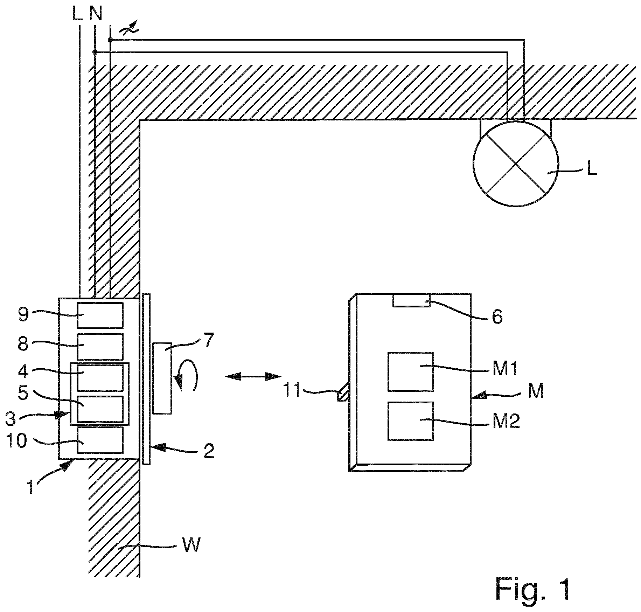

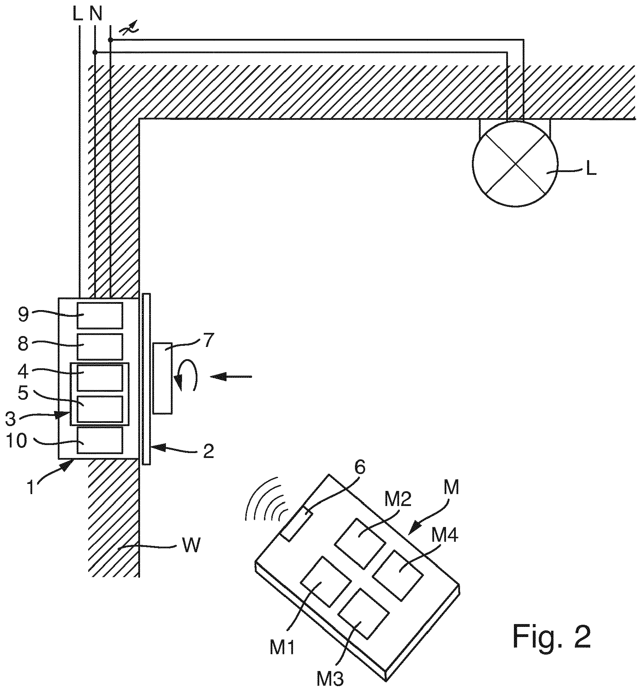

Wie des Weiteren aus Figur 1 und Figur 2 hervorgeht, ist der Dimmer D bei den beiden vorliegenden Ausführungsbeispielen jeweils an das Versorgungsnetz des Gebäudes angeschlossen und steht beeinflussungsseitig jeweils über eine Steuerleitung mit einem Leuchtmittel L in Verbindung. Das Leuchtmittel L ist ebenfalls an das Versorgungsnetz des Gebäudes angeschlossen und im vorliegenden Fall als Leuchte ausgeführt, die mit einer LED-Lampe bestückt ist. Jeweils über eine, in der Unterputzeinheit 1 angeordnete Leistungselektronik 8 und ein Netzteil 9 werden die aufbereiteten Steuerinformationen (Steuerprogramme) drahtgebunden an das Leuchtmittel L übertragen, um dieses bedarfsgerecht zu beeinflussen, das heißt, einzuschalten, auszuschalten und/oder durch Dimmen in seiner Helligkeit zu beeinflussen. Bei den beiden dargestellten Ausführungsbeispielen leitet die Logikeinheit 3 jeweils die Steuerinformationen an die Leistungselektronik 8 und das Netzteil 9 weiter, um anschließend diese Steuerinformationen (Steuerprogramme) zur bedarfsgerechten Beeinflussung des jeweils angeschlossenen Leuchtmittels L zu verwenden.

Soll auf einfache Art und Weise eine Anpassung der Steuerinformationen (Steuerprogramme) an die angeschlossenen Leuchtmittel L durchgeführt werden, wird vom Benutzer zunächst das mobile Messgerät M eingeschaltet und zur Messung an einen dafür besonders geeigneten Ort (direkte Sichtverbindung zum Leuchtmittel L) gebracht. Anschließend wird vom Benutzer durch das Verdrehen der als Dreh-/Drücksteller ausgebildeten Bedieneinheit 7 ein kompletter Dimmvorgang durchgeführt, wobei gleichzeitig durch den Lichtsensor 6 des Messgerätes M die lichttechnischen Änderungen (Helligkeitsänderungen) des an den Dimmer D angeschlossenen Leuchtmittels L erfasst werden. Anschließend werden, wie bereits beschrieben, die lichttechnischen Änderungen über den zweiten Mikrocontroller M1 in den zweiten Speicher M2 des mobilen Messgerätes M eingeschrieben und für eine Übertragung an die Logikeinheit 3 des Dimmers D entsprechend aufbereitet. Es kann jedoch genauso gut durch eine Bedienung (z. B. Tastbetätigung) des Dimmers D ein automatischer Einmessvorgang eingeleitet werden, bei welchem ein Durchfahren verschiedener Dimmrampen erfolgt. Zu Kommunikationszwecken kann der Dimmer D über das vom Leuchtmittel L abgegebene sichtbare Licht zum Beispiel durch Pulsen desselben Informationen an das Messgerät M übertragen.

Wie insbesondere aus Figur 1 hervorgeht, ist das mit dem Lichtsensor 6 ausgerüstete mobile Messgerät M als eine, über eine Steckverbindung 11 mit der Unterputzeinheit 1 des Dimmers D verbindbare weitere Aufsatzeinheit ausgeführt. Das als weitere Aufsatzeinheit ausgeführte Messgerät M ist mit einem zweiten Mikrocontroller M1 ausgerüstet, über welchen die lichttechnischen Änderungen in den zugehörigen zweiten Speicher M2 des Messgerätes M eingeschrieben werden. Für eine Übertragung der durch den Lichtesensor 6 gemessenen lichttechnischen Änderungen (Messwerte), wird das Messgerät M über seine Steckverbindung 11 auf die Unterputzeinheit 1 des Dimmers D aufgesteckt, nachdem dessen, mit der Bedieneinheit 7 versehene Aufsatzeinheit 2 entfernt wurde. Durch einen Übertragungsbefehl, welcher zum Beispiel durch das Betätigen eines am Messgerät M vorhandenen - der Einfachheit halber nicht dargestellten - Drucktastenschalters auszulösen ist, werden die gemessenen lichttechnischen Änderungen im Rahmen eines Einlernvorganges an die Logikeinheit 3 des Dimmers D übertragen. Wie bereits beschrieben, findet im Rahmen des Einlernvorganges dann die entsprechende Aufbereitung und gegebenenfalls die entsprechende Anpassung der im Speicher 4 abgelegten Steuerinformationen (Steuerprogrammen) statt, um eine bedarfsgerechte Beeinflussung der angeschlossenen Leuchtmittel L (Leuchten, Lampen) zu ermöglichen. Nach erfolgreicher Übertragung der Messwerte und einer entsprechenden Anpassung der Steuerinformationen (Steuerprogramme) ist der Einlernvorgang abgeschlossen, so dass das Messgerät M wieder von der Unterputzeinheit 1 des Dimmers D entfernt werden und die mit der Bedieneinheit 7 versehene Aufsatzeinheit 2 wieder auf den Dimmer D aufgesetzt werden kann. Der Dimmer D befindet sich nun wieder in seinem Betriebsmodus und kann vom Benutzer wie üblich zur Beeinflussung des angeschlossenen Leuchtmittels L verwendet werden.

Wie insbesondere aus Figur 2 hervorgeht ist das mit dem Lichtsensor 6 ausgerüstete mobile Messgerät M ähnlich einer Fernbedienung ausgeführt und kann datentechnisch über eine Funkverbindung mit dem Dimmer D in Verbindung gebracht werden. Das ähnlich einer Fernbedienung ausgeführte Messgerät M ist mit einem zweiten Mikrocontroller M1 ausgerüstet, über welchen die lichttechnischen Änderungen in den zugehörigen zweiten Speicher M2 des Messgerätes M eingeschrieben werden. Zudem weist das, ähnlich einer Fernbedienung ausgeführte, Messgerät M eine zweite Funkeinheit M3 inklusive Antenne und eine Spannungsversorgung M4 in Form einer Batterie auf. Für eine Übertragung der durch den Lichtesensor 6 gemessenen lichttechnischen Änderungen (Messwerte), wird das Messgerät M und der Dimmer D in einen Einlernmodus gebracht. Innerhalb des Einlernmodus werden dann die lichttechnischen Änderungen (Messwerte) funktechnisch unter Ausnutzung der zweiten Funkeinheit M3 und der Funkeinheit 10 an die Logikeinheit 3 des Dimmers D übertragen. Wie bereits beschrieben, findet dann im Rahmen des Einlernvorganges die entsprechende Aufbereitung und gegebenenfalls die entsprechende Anpassung der im Speicher 4 abgelegten Steuerinformationen (Steuerprogrammen) statt, um eine bedarfsgerechte Beeinflussung der angeschlossenen Leuchtmittel L (Leuchten, Lampen) zu ermöglichen. Nach erfolgreicher Übertragung der Messwerte und einer entsprechenden Anpassung der Steuerinformationen (Steuerprogramme) ist der Einlernvorgang abgeschlossen. Das Messgerät M wird wieder in seinen Ruhezustand und der Dimmers D wieder in seinen Betriebsmodus versetzt. Der Benutzer kann über den Dimmer D nun wieder wie üblich die gewünschte Beeinflussung des angeschlossenen Leuchtmittels L vornehmen.

Der Lichtsensor 6 ist bei den beiden vorliegenden Ausführungsbeispielen jeweils als Kamera ausgeführt. Um leuchtmittelspezifisch eine optimale Dimmung zu ermöglichen, werden die bereits im Speicher 4 abgelegten Steuerinformationen (Steuerprogramme), wie bereits beschrieben, hinsichtlich der Realisierung eines optimalen Dimmverhaltens angepasst und ersetzen somit die vorher im Speicher 4 abgespeicherten Steuerinformationen (Steuerprogramme). Somit bietet ein solcher Dimmer D auf einfache Art und Weise eine automatische Anpassung der im Speicher 4 abgelegten Steuerinformationen (Steuerprogramme), um möglichst optimal eine bedarfsgerechte Beeinflussung des angeschlossenen Leuchtmittels L zu ermöglichen. Wird das Leuchtmittel L zum Beispiel durch den Benutzer ausgetauscht und durch ein anderes (andersartiges) Leuchtmittel L ersetzt, kann durch den vorbeschriebenen Vorgang wiederum auf einfache Art und Weise eine Anpassung vorgenommen werden, um möglichst optimal eine bedarfsgerechte Beeinflussung des dann zur Verwendung kommenden neuen Leuchtmittels L zu ermöglichen. Es kann somit auch optimal auf den Ersatz von Leuchtmitteln L reagiert werden, die in ihrem Dimmverhalten starke Unterschiede aufweisen. Alternativ und/oder zusätzlich können im Speicher 4 des Dimmers D mehrere, zum Beispiel zehn verschiedene, vorgefertigte Steuerprogramme (Steuerinformationen) hinterlegt sein, die hinsichtlich der bedarfsgerechten Beeinflussung optimal auf verschiedene Leuchtmittel L mit unterschiedlichen Dimmverhalten abgestimmt sind. In diesem Fall ist es dann möglich, nach der Durchführung eines Einlernvorganges durch die Logikeinheit 3 das bestmöglich passende Steuerprogramm (Steuerinformationen) auszusuchen und als das anzuwendende in den Speicher 4 einzuschreiben, um möglichst optimal eine bedarfsgerechte Beeinflussung des aktuell eingebauten Leuchtmittels L vornehmen zu können.

Wie des Weiteren aus der Figur hervorgeht, ist der in einer Wand W des Gebäudes eingebaute Dimmer D mit einer Funkeinheit 10 ausgerüstet. Im vorliegenden Fall ist die Funkeinheit 10 in der Unterputzeinheit 1 angeordnet und steht datentechnisch mit der Logikeinheit 3 in Verbindung. Somit ist es möglich, über die Funkeinheit 10 auch eine bedarfsgerechte Beeinflussung von Leuchtmitteln L vorzunehmen, die nicht leitungsgebunden mit der Logikeinheit 3 in Verbindung stehen. Alternativ zur vorstehend beschriebenen und in den Figuren dargestellten konventionellen Verdrahtung kann der Dimmer D und das Leuchtmittel L auch zur Verwendung in einer Gebäudeinstallation vorgesehen sein, die als zumindest teilweise drahtgebundenes oder zumindest teilweise funkbasiertes Bussystem (KNX) ausgeführt ist. Auch kann das Leuchtmittel L (Lampe, Leuchte) direkt mit einem Vorschaltgerät, einem Netzteil und/oder mit einer Leistungselektronik ausgerüstet sein, so dass der Dimmer D selbst vergleichsweise einfach aufgebaut sein kann.

Es ist somit ein Dimmer D realisiert, der die Möglichkeit bietet, auf besonders einfache Art und Weise eine Anpassung der Steuerinformationen (Steuerprogramme) vorzunehmen, um möglichst optimal eine bedarfsgerechte Beeinflussung der angeschlossenen Leuchtmittel L (Leuchten, Lampen) zu ermöglichen. Hierbei ist besonders vorteilhaft, dass zur bedarfsgerechten Ansteuerung von neuartige Anforderungen stellenden Leuchtmitteln L (Lampen, Leuchten) lediglich eine Anpassung oder ein Austausch der in der Logikeinheit 3 abgelegten Steuerinformationen (Steuerprogramme) durchzuführen ist, was teilweise automatisch mittels der Durchführung eines kompletten Dimmvorganges bei Erfassung der sich dabei ergebenden lichttechnischen Veränderungen (Helligkeitsänderungen) auf besonders einfache Art und Weise erfolgt.

### Bezugszeichenliste:

- 1.: Unterputzeinheit
- 2.: Aufsatzeinheit
- 3.: Logikeinheit
- 4.: Speicher
- 5.: Mikrocontroller
- 6.: Lichtsensor
- 7.: Bedieneinheit
- 8.: Leistungselektronik
- 9.: Netzteil
- 10.: Funkeinheit
- 11.: Steckverbindung

- D: Dimmer
- L: Leuchtmittel (Lampen, Leuchten)
- M: Messgerät
- M1: Zweiter Mikrocontroller
- M2: Zweiter Speicher
- M3: Zweite Funkeinheit
- M4: Spannungsversorgung
- W: Wand

## Patentansprüche

1. Geräteanordnung bestehend aus zumindest einem Dimmer (D) und einem damit datentechnisch in Verbindung bringbaren weiteren Gerät, wobei der zumindest eine Dimmer (D) zur bedarfsgerechten Beeinflussung von in Gebäuden installierten Leuchtmitteln (L) mit einer Logikeinheit (3) zur Verarbeitung und Aufbereitung von Steuerinformationen versehen ist und wobei die Logikeinheit (3) steuerseitig mit zumindest einer Bedieneinheit (7) und beeinflussungsseitig mit zumindest einem der im Gebäude installierten Leuchtmittel (L) in Verbindung steht, wobei die Logikeinheit (3) einen Speicher (4) zur veränderbaren Speicherung von leuchtmittelspezifischen Steuerinformationen, auch zu bezeichnen als Steuerprogrammen, aufweist, **dadurch gekennzeichnet, dass** die Logikeinheit (3) des zumindest einen Dimmers (D) datentechnisch mit einem als das weitere Gerät ausgeführten mobilen Messgerät (M) in Verbindung bringbar ist, welches einen Lichtsensor (6) aufweist, wobei in einem Einlernvorgang der Lichtsensor (6) während zumindest eines durchgeführten Dimmvorganges mittels des zumindest einen Dimmers (D) die sich dadurch ergebenden lichttechnischen Veränderungen der Helligkeit des zumindest einen Leuchtmittels (L) erfasst und diese der Logikeinheit (3) zuführt, und dass die Logikeinheit (3) die, durch den Lichtsensor (6) des mobilen Messgerätes (M), erfassten lichttechnischen Veränderungen im Rahmen des Einlernvorganges zur Anpassung der im Speicher (4) des Dimmers (D) abgelegten Steuerinformationen, auch zu bezeichnen als Steuerprogrammen, heranzieht, und dass der zumindest eine Dimmer (D) aus einer Unterputzeinheit (1) und einer Aufsatzeinheit (2) besteht, und dass in der Unterputzeinheit (1) oder in der Aufsatzeinheit (2) zumindest die Logikeinheit (3) untergebracht ist, und dass die Aufsatzeinheit (2) die zumindest eine Bedieneinheit (7) aufweist.

2. Geräteanordnung nach Anspruch 1, **dadurch gekennzeichnet, dass** die Logikeinheit (3) beeinflussungsseitig über ein Bussystem mit dem zumindest einem Leuchtmittel (L) in Verbindung steht.

3. Geräteanordnung nach Anspruch 1, **dadurch gekennzeichnet, dass** die Logikeinheit (3) beeinflussungsseitig über ein Vorschaltgerät mit dem zumindest einem Leuchtmittel (L) in Verbindung steht.

4. Geräteanordnung nach Anspruch 1, **dadurch gekennzeichnet, dass** die Logikeinheit (3) beeinflussungsseitig über eine Leistungselektronik (8) und ein Netzteil (9) mit dem zumindest einem Leuchtmittel (L) in Verbindung steht.

5. Geräteanordnung nach einem der Ansprüche 1 bis 4, **dadurch gekennzeichnet, dass** der Lichtsensor (6) als Kamera ausgeführt ist.

6. Geräteanordnung nach einem der Ansprüche 1 bis 5, **dadurch gekennzeichnet, dass** die Logikeinheit (3) mit zumindest einer Funkeinheit (10) in Verbindung steht.

7. Geräteanordnung nach einem der Ansprüche 1 bis 6, **dadurch gekennzeichnet, dass** die Logikeinheit (3) zumindest einen Mikrocontroller (5) aufweist.

8. Geräteanordnung nach einem der Ansprüche 1 bis 7, **dadurch gekennzeichnet, dass** die Logikeinheit (3) zum Anschluss eines von außen zuzuführenden Speichermediums vorgesehen ist.

9. Geräteanordnung nach einem der Ansprüche 1 bis 8, **dadurch gekennzeichnet, dass** ein Betrieb der Geräteanordnung in einem zumindest teilweise drahtgebundenen Bussystem vorgesehen ist.

10. Geräteanordnung nach einem der Ansprüche 1 bis 8, **dadurch gekennzeichnet, dass** ein Betrieb der Geräteanordnung in einem zumindest teilweise funkbasierten Bussystem vorgesehen ist.

11. Geräteanordnung nach einem der Ansprüche 1 bis 10, **dadurch gekennzeichnet, dass** das mit dem Lichtsensor (6) ausgerüstete mobile Messgerät (M) als eine, über eine Steckverbindung mit der Unterputzeinheit (1) des Dimmers (D) verbindbare weitere Aufsatzeinheit ausgeführt ist.

12. Geräteanordnung nach einem der Ansprüche 1 bis 10, **dadurch gekennzeichnet, dass** das mit dem Lichtsensor (6) ausgerüstete mobile Messgerät (M) ähnlich einer Fernbedienung ausgeführt und datentechnisch über eine Funkverbindung mit dem Dimmer (D) verbindbar ist.

13. Geräteanordnung nach einem der Ansprüche 1 bis 12, **dadurch gekennzeichnet, dass** das zumindest ein zu beeinflussendes Leuchtmittel (L) als zumindest eine, in eine Leuchte eingebaute LED-Lampe ausgeführt ist.

## Claims

1. Arrangement of appliances consisting of at least one dimmer (D) and a further device which can be connected to the dimmer via data link, wherein the at least one dimmer (D) is provided with a logic unit (3) for processing and conditioning of control information for influencing of luminaires (L) installed in buildings in line with the demand, and wherein the logic unit (3) on the control side is connected to at least one operation unit (7) and on the impact side with at least one of the luminaires (L) installed in the building, wherein the logic unit (3) provides a memory (4) for alterable storage of luminous control information, also to be called control programs, **characterized by the fact** that the logic unit (3) of the at least one dimmer (D) can be connected as a data link with one mobile measuring device (M), designed as the further device, which provides a light sensor (6), wherein in a teach-in process the light sensor (6), during at least one dimming process by means of the at least one dimmer (D) detects the resulting luminous changes in brightness of the at least one luminaire (L) and sends these changes to the logic unit (3), and that during the teach-in process the logic unit (3) uses the luminous changes detected by the light sensor (6) of the mobile measuring device (M) for adaptation of the control information stored in the memory (4) of the dimmer (D), also called control programms, and that the at least one dimmer (D) consists of a flush-mounted unit (1) and a surface-mounted unit (2), and that in the flush-mounted unit (1) or in the surface-mounted unit (2) at least the logic unit (3) is housed, and that the surface-mounted unit (2) provides the at least one operation unit (7).

2. Arrangement of appliances in accordance with Claim 1, **characterized by the fact** that on the impact side the logic unit (3) is connected with the at least one luminaire (L) via a bus system.

3. Arrangement of appliances in accordance with Claim 1, **characterized by the fact** that on the impact side the logic unit (3) is connected with the at least one luminaire (L) via a ballast.

4. Arrangement of appliances in accordance with Claim 1, **characterized by the fact** that on the impact side the logic unit (3) is connected with the at least one luminaire (L) via power electronics (8) and a power supply unit (9).

5. Arrangement of appliances in accordance with any of Claims 1 to 4, **characterized by the fact** that the light sensor (6) is designed as camera.

6. Arrangement of appliances in accordance with any of Claims 1 to 5, **characterized by the fact** that the logic unit (3) is connected with at least one radio unit (10).

7. Arrangement of appliances in accordance with any of Claims 1 to 6, **characterized by the fact** that the logic unit (3) provides at least one microcontroller (5).

8. Arrangement of appliances in accordance with any of Claims 1 to 7, **characterized by the fact** that the logic unit (3) is provided for connection of a data carrier fed in from outside.

9. Arrangement of appliances in accordance with any of Claims 1 to 8, **characterized by the fact** that an operation of the arrangement of appliances in an at least partially wired bus system is intended.

10. Arrangement of appliances in accordance with any of Claims 1 to 8, **characterized by the fact** that an operation of the arrangement of appliances in an at least partially radio-based bus system is intended.

11. Arrangement of appliances in accordance with any of Claims 1 to 10, **characterized by the fact** that the mobile measuring device (M) equipped with the light sensor (6) is designed as a further top piece to be connected to the flush-mounted unit (1) of the dimmer (D) via a plug connection.

12. Arrangement of appliances in accordance with any of Claims 1 to 10, **characterized by the fact** that the mobile measuring device (M) equipped with the light sensor (6) is designed similar to a remote control and can be connected to the dimmer (D) as data-link via a radio connection.

13. Arrangement of appliances in accordance with any of Claims 1 to 12, **characterized by the fact** that the at least one luminaire (L) to be influenced is designed as at least one LED-lamp installed in a luminaire.

## Revendications

1. Système d'appareils composé d'au moins un dimmer (D) et d'un autre appareil pouvant être connecté à celui-ci par une liaison informatique, cet au moins un dimmer (D) étant muni d'une unité logique (3) destinée à l'analyse et au traitement d'informations de commande, permettant d'influencer en fonction des besoins des ampoules (L) installées dans des bâtiments, l'unité logique (3) étant reliée du côté utilisateur à au moins une unité de commande (7) et du côté influence à au moins une des ampoules (L) installées dans le bâtiment, l'unité logique (3) présentant une mémoire (4) pour l'enregistrement modifiable d'informations de commande spécifiques des ampoules, pouvant également être caractérisées de programmes de commande, **caractérisé en ce que** l'unité logique (3) du au moins un dimmer (D) peut être connectée informatiquement à un appareil de mesure mobile (M) constituant l'autre appareil, lequel présente un capteur de lumière (6), le capteur de lumière (6) saisissant dans le cadre d'une procédure d'apprentissage, pendant au moins une opération de dimmage réalisée à l'aide du au moins un dimmer (D), les modifications de la clarté de l'ampoule (L) au moins donnée en résultant sur le plan de la technique d'éclairage, et les transmettant à l'unité logique (3), et **en ce que** l'unité logique (3) utilise les modifications techniques de l'éclairage saisies par le capteur de lumière (6) de l'appareil de mesure mobile (M) dans le cadre du processus d'apprentissage pour l'adaptation des informations de commande enregistrées dans la mémoire (4) du dimmer (D), pouvant également être caractérisées de programmes de commande, et **en ce que** le au moins un dimmer (D) se compose d'une unité encastrée (1) et d'une unité en saillie (2), et **en ce que** au moins l'unité logique (3) est logée dans l'unité encastrée (1) ou l'unité en saillie (2) et **en ce que** l'unité en saillie (2) présente une unité de commande (7).

2. Système d'appareils selon la revendication 1, **caractérisé en ce que** l'unité logique (3) est, du côté influence, reliée à l'au moins une ampoule (L) par l'intermédiaire d'un système de bus.

3. Système d'appareils selon la revendication 1, **caractérisé en ce que** l'unité logique (3) est, du côté influence, reliée à l'au moins une ampoule (L) par l'intermédiaire d'un ballast.

4. Système d'appareils selon la revendication 1, **caractérisé en ce que** l'unité logique (3) est, du côté influence, reliée à l'au moins une ampoule (L) par l'intermédiaire d'un système électronique de puissance (8) et d'un bloc d'alimentation (9).

5. Système d'appareils selon l'une des revendications 1 à 4, **caractérisé en ce que** le capteur de lumière (6) est réalisé sous forme de caméra.

6. Système d'appareils selon l'une des revendications 1 à 5, **caractérisé en ce que** l'unité logique (3) est reliée à au moins une unité radio (10).

7. Système d'appareils selon l'une des revendications 1 à 6, **caractérisé en ce que** l'unité logique (3) présente au moins un microcontrôleur (5).

8. Système d'appareils selon l'une des revendications 1 à 7, **caractérisé en ce que** l'unité logique (3) est prévue pour être raccordée à un support de mémoire devant être rajouté extérieurement.

9. Système d'appareils selon l'une des revendications 1 à 8, **caractérisé en ce que** une utilisation du système d'appareils dans un système de bus au moins partiellement filaire est prévue.

10. Système d'appareils selon l'une des revendications 1 à 8, **caractérisé en ce que** une utilisation du système d'appareils dans un système de bus au moins partiellement radio est prévue.

11. Système d'appareils selon l'une des revendications 1 à 10, **caractérisé en ce que** l'appareil de mesure mobile (M) équipé du capteur de lumière (6) est réalisé sous forme d'une autre unité en saillie pouvant être reliée par prise à l'unité encastrée (1) du dimmer (D).

12. Système d'appareils selon l'une des revendications 1 à 10, **caractérisé en ce que** l'appareil de mesure mobile (M) équipé du capteur de lumière (6) est réalisé de manière similaire à une télécommande et peut être connecté informatiquement au dimmer (D) par connexion radio.

13. Système d'appareils selon l'une des revendications 1 à 12, **caractérisé en ce que** l'au moins une ampoule (L) devant être influencée est réalisée sous forme d'au moins une ampoule LED intégrée dans une lampe.
